# EUROPÄISCHE PATENTSCHRIFT

(11) **EP 0 928 308 B1**
(45) Veröffentlichungstag und Bekanntmachung des Hinweises auf die Patenterteilung: **09.12.2009**
(21) Anmeldenummer: 97942692.1
(22) Anmeldetag: 23.09.1997
(51) Int. Cl.: C08J 3/12

(54) **SPRÜHGETROCKNETE DISPERSIONEN, VERFAHREN ZU IHRER HERSTELLUNG UND DEREN ANWENDUNG**
SPRAY-DRIED DISPERSIONS, PROCESSES FOR THEIR PRODUCTION AND USE
DISPERSIONS SECHEES PAR PULVERISATION, ET PROCEDE DE FABRICATION ET UTILISATION ASSOCIES

(30) Priorität: 24.09.1996 AT 169196
(43) Veröffentlichungstag der Anmeldung: 14.07.1999
(73) Patentinhaber: BASF SE, 67056 Ludwigshafen (DE)
(72) Erfinder: HAUPT, Martin, A-3500 Krems (AT); AXMANN, Heinz, A-3400 Klosterneuburg (AT)
(86) Internationale Anmeldenummer: PCT/AT1997/000206
(87) Internationale Veröffentlichungsnummer: WO 1998/013411

(56) Entgegenhaltungen:
- EP-A- 0 199 306
- EP-A- 0 575 930
- EP-A- 0 629 650
- EP-A- 0 728 795
- WO-A-97/38042
- AU-A- 1 511 376
- DE-A- 3 323 804
- DE-A- 4 221 914
- GB-A- 1 569 637
- IL-A- 42 783
- JP-A- 59 088 999
- US-A- 3 903 032
- US-A- 4 054 717
- US-A- 4 402 977
- US-A- 4 487 867
- US-A- 4 500 597
- US-A- 4 534 892
- US-A- 4 591 610
- US-A- 4 693 839
- US-A- 4 735 887
- US-A- 4 783 224
- US-A- 4 796 646
- US-A- 4 994 088
- RÖMPP CHEMIE LEXIKON, 1989, Seite 177,
- CONCISE ENCYCLOPEDIA OF POLYMER SCIENCE AND ENGINEERING, 1991, Seiten 530-532,
- WILLIAMS P.A. ET AL: 'Adsorption of an Amphoteric Polymer on Barium Sulphate and its Effect on Colloid Stability' J. CHEM. SOC., FARADAY TRANS. 1 1984, Seiten 403 - 411
- WANG J. ET AL: 'Piezoelectric pH Sensors: AT-Cut Quartz Resonators with Amphoteric Polymer Films' ANAL. CHEM. Bd. 65, 1993, Seiten 2553 - 2562
- Beilstein Abstracts: Anal. Chem. 1993, 2553-2562
- Beilstein Abstracts: J. Chem. Soc. Faraday Trans 1, 1984, 403-412
- FROMHERZ H. PHYSIKALISCH-CHEMISCHES RECHNEN IN WISSENSCHAFT UND TECHNIK Seiten 208 - 209

## Beschreibung

Die vorliegende Erfindung betrifft sprühgetrocknete Dispersionen, die gelegentlich auch als Trockendispersionen bezeichnet werden. Darunter werden pulverförmige, redispergierbare Bindemittel verstanden, die sich durch einfaches Einrühren in Wasser in eine gebrauchsfähige Form überführen lassen.

Aus EP-A-0 654 454, EP-A-0 629 650, EP-A-0 671 435, DE-A-40 21 216 und DE-A-41 18 007 ist es bekannt, Trockendispersionen mit einer niedrigen Glasumwandlungstemperatur nach zwei prinzipiell unterschiedlichen Wegen herzustellen.

Der erste Weg ist das sogenannte core-shell-Verfahren. Darin wird auf einen weichen Polymerkern im Zuge der Polymerisation ein harter wasserlöslicher Polymermantel aufpolymerisiert.

Der zweite Weg sieht nach der Herstellung einer Polymerdispersion mit niedriger Glasumwandlungstemperatur die Anwendung eines wasserlöslichen Coatingmittels oder Sprühhilfsmittels vor, das bei der Sprühtrocknung die Klebrigkeit der Polymerteilchen herabsetzen bzw. verhindern soll.

Beide Herstellungswege führen zu mehr oder weniger gut redispergierbaren Trockendispersionen, wobei die Redispergierbarkeit mitunter durch die erforderlichen hohen Einsatzmengen der Coatingmittel beeinträchtigt wird. Weiterhin muß ein verhältnismäßig hoher Anteil an Coatingmittel eingesetzt werden, der bis zu 20-25% betragen kann, um beim Sprühtrocknen ein nicht zusammenballendes, klebfreies Pulver zu erhalten. Der hohe Coatingmittelanteil kann nachteilig sein, da die eingesetzten Coatingmittel meistens Nebenwirkungen aufweisen. Abgesehen von gewünschten Nebeneffekten, beispielsweise einer Verflüssigung, treten vor allem unerwünschte Nebeneffekte auf, wie z.B. eine Versprödung, wenn die Trockensuspensionen in Kombination mit Zement zur Anwendung gelangen. Es ist nur schwer möglich, mit einem ein Coatingmittel aufweisenden Polymerpulver hochflexible, dehnbare, rißüberbrückende Beschichtungen herzustellen.

Der vorliegenden Erfindung lag daher die Aufgabe zugrunde, neue sprühgetrocknete Dispersionen und ein Verfahren zu deren Herstellung bereitzustellen.

Diese Aufgabe wird durch die erfindungsgemäßen redispergierbaren sprühgetrockneten Dispersionen eines Polymerisats auf Basis Vinylacetat, Styrol, Acrylsäureester und deren Copolymeren gelöst, die sich dadurch auszeichnen, daß die die Polymerisatpartikel bildenden Mizellen des Emulsionspolymerisats einen Überzug aus einem amphoteren Polymer, ausgenommen auf caseinbasis, aufweisen, wobei der Gesamtladungszustand der Mizelle nicht verändert wird.

Amphotere Coatingmittel, ausgenommen solche auf Caseinbasis, sind dem Stand der Technik nicht zu entnehmen.

So sind in der bereits eingangs erwähnten EP-A-0 629 650 redispergierbare, sprühgetrocknete Pulver beschrieben, welche durch Sprühtrocknung aus wäßrigen Dipersionen von Polymerisaten der Formel (II) unter Verwendung von Polymerisaten der Formel (I) als Sprühhilfsmittel erhalten werden. Im Beispiel 1) DPIa wird als Sprübbilfsmittel ein wäßrige Dispersion eines Copolymers aus (1) 2-Acrylamido-2-methylpropansulfonsäure und (2) Methylmethacrylat hergestellt. Der pH-Wert der erhaltenen Polymerisatdispersion beträgt 5,8. Als Polymerisat (II) wird ein Coplymer auf Basis von Butylacrylat/Styrolbasis eingesetzt; die damit erhaltene Dispersion besitzt einen pH-Wert von 8,1. Zur Herstellung des redispergierbaren, sprühgetrockneten Pulvers wurde eine auf einen Feststoffgehalt von 35 Cew.-% eingestellte Mischung der beiden Dispersionen eingesetzt. Angaben über den Ladungszustand des eingesetzten Polymerisats (I) finden sich in diesem Dokument nicht, jedoch kommt es unter den Bedingungen der Sprühtrockung bereits zu einer Hydrolyse, das heißt zu einem Anbau von Amiden . Ebenfalls erfolgt bei der Dispersion selbst, sofern diese Amide (Acrylamid) enthalt, ein Abbau. Bei den höheren pH-Werten liegt schließlich keine amphotere Substanz vor, sondern vielmehr eine rein anionische.

Ein anionische Polymerisat als Coatingmittel wird auch EP-A-0 728 795 eingesetzt, worin ein Verfahren zur Herstellung von Mischungen aus a) amphiphilen Polymeren und b) Polycarboxylaten beschrieben ist. In den Beispielen wird ua eine Mischung aus einer Lösung eines Vinylacetat/Polyethylenoxid-Propfpolymerisats und einer Lösung eines partiell neutralisierten Copolymerisats aus Acrylsäure und Maleinsäure hergestellt und anschließend versprüht. Die als Coatingmittel eingesetzten Copolymerisate aus Acrylsäure und Maleinsäure sind bekannte anionische Polymerisate.

In der WO-97/38042 sind redispergierbare Pulver beschrieben, welche einen Überzug auf Caseinbasis aufweisen. Bei diesem Dokument handelt es sich um einen Stand der Technik gemäß Artikel 54 (3) EPÜ. Coatingmittel auf Caseinbasis sind daher von den erfindungsgemäß eingesetzten amphoteren Coatingmitteln ausdrücklich ausgenommen.

Der Gegenstand der Erfindung löst die im bisherigen Stand der Technik auftretenden Probleme, indem er ein amphoteres Polymer als Coatingmittel einsetzt. Dieses amphotere Coatingmittel, das sich von den anionischen Coatingmitteln unterscheidet, die im Stand der Technik beschrieben werden, lagert sich an die negativ geladene Polymermizelle an, wobei der Gesamtladungszustand der Mizelle nicht verändert wird und solcherart die Mizelle stabil bleibt. Werden hingegen, dem Stand der Technik entsprechend, anionisch geladene Coatingmittel und anionisch geladene oder auch neutrale Polymere eingesetzt, so erfolgt eine Abstoßung der negativen Ladungen und der Coatingprozeß kann erst bei höheren Konzentrationen stattfinden. Er erfolgt erst dann, wenn sich mehrere Mizellen bereits zu größeren Aggregaten aneinander gelagert haben. Es versteht sich, daß dafür eine größere Menge an Coatingmittel erforderlich ist. Derartige Aggregate sind dann schwerer redispergierbar, worauf bereits hingewiesen worden ist.

Die erfindungsgemäß zum Einsatz gelangenden Emulsionspolymerisate weisen bevorzugt eine niedrige Glasumwandlungstemperatur von insbesondere -5°C bis -70°C auf und bevorzugt enthalten die Polymerisate anionische Gruppen, wie z.B. -COOH.

Für das erfindungsgemäß eingesetzte Coatingmittel eignen sich als amphotere Polymere insbesondere solche mit einer hohen Glasumwandlungstemperatur, die mindestens über Zimmertemperatur und vorzugsweise im Bereich von 50°C bis über 130°C liegt, wobei amphotere Polymere auf Caseinbasis ausgenommen sind. Hiefür kommen sowohl natürliche als auch synthetische Polymere, beispielsweise Polysaccharide, natürliche Proteine und Copolymere von Acrylsäureestern, ungesättigten Carbonsäuren und dergleichen mit tertiären oder quartären Ammoniumgruppen in der Seitenkette in Betracht. Unter den Polysacchariden werden Stärken bevorzugt. Als natürliche Proteine kommen insbesondere Gelatine, Weizenprotein, Kartoffelprotein, Erbsenprotein und Maisprotein in Betracht.

Zweckmäßig können die erfindungsgemäß eingesetzten amphoteren Polymere in wasserlöslicher Form, beispielsweise als Natriumsalz, vorliegen, wodurch bei der Anwendung der erfindungsgemäßen Trockendispersionen in Kombination mit einer zementären Mischung ein Zusatzeffekt bewirkt werden kann, wie Verdickung, Verdünnung, Verzögerung, Beschleunigung und dergleichen.

Erfindungsgemäß wird das amphotere Polymere in einem Bereich von 2 bis 10%, bezogen auf Festkörper des eingesetzten Polymers mit niedriger Glasumwandlungstemperatur, angewendet.

Zur Herstellung der erfindungsgemäßen redispergierbaren sprühgetrockneten Dispersionen wird die aus der Emulsionspolymerisation erhaltene Dispersion von Polymerisaten mit Glasübergangstemperaturen von -5°C bis -70°C mit einer Lösung des amphoteren Polymers mit einer mindestens über Zimmertemperatur liegenden Glasübergangstemperatur versetzt und in einem heißen Luftstrom zu einem freifließenden, staubarmen Pulver sprühgetrocknet.

Es ist überraschend, daß erfindungsgemäß bereits mit einer so geringen Menge wie 2% Zusatz an amphoterem Polymer zufriedenstellende Ergebnisse bei der Sprühtrocknung von Polymerisatdispersionen erzielt werden können, verglichen mit 20% oder mehr bei Ausführung der Methoden nach dem Stand der Technik. Ein Zusatz von 10% an amphoterem Polymer reicht jedenfalls aus, um völlig klebfreie, leicht sprühgetrocknete Dispersionen zu erhalten.

Durch die erfindungsgemäß mögliche Anwendung niedriger Konzentrationen an amphoterem Coatingmittel wird die Formulierung des Endproduktes nicht mehr wesentlich beeinflußt. So können beispielsweise hochflexible, bei tiefen Temperaturen rißüberbrückende Systeme formuliert werden, die bisher nur unter Anwendung von flüssigen Dispersionen erhalten werden konnten. Die redispergierbaren sprühgetrockneten Dispersionen können daher zur Herstellung von Trockenmischungen für Anstrich- und Beschichtungsmassen sowie, in Kombinationen mit hydraulisch abbindenden Massen, zur Herstellung hochflexibler, dehnbarer, rißüberbrückender Beschichtungen, eingesetzt werden. Ein zusätzlicher Vorteil der erfindungsgemäßen Trockendispersionen liegt in der Anwendung von Proteinen als amphotere Polymere, die in einer Endformulierung, beispielsweise in einer Mischung mit Zement, schwerlösliche Calciumverbindungen ausbilden, die ihrerseits wasserfest sind, selbst aber noch eine gewisse Flexibilität aufweisen. Zusätzlich wirken derartige Substanzen stark verflüssigend.

Die nachfolgenden Beispiele sollen den Gegenstand der Erfindung erläutern, ohne ihn jedoch einzuschränken.

### Beispiel 1 (nicht erfindungsgemäß)

Durch Emulsionspolymerisation wurde eine anionisch stabilisierte Dispersion von Styrol-Acrylsäureester-Copolymer mit einem Gehalt an Acrylsäuregruppen (Tg -15°C) hergestellt und in eine 10%ige Natriumcaseinatlösung langsam unter Rühren eingetropft. Zur viskositätseinstellung wurde der Natriumcaseinatlösung 4% Harnstoff zugesetzt. Die Dispersion wurde mit Wasser verdünnt und bei einer Eingangstemperatur von 135°C und einer Ausgangstemperatur von 95°C durch Sprühtrocknung zu einem klebfreien, feinteiligen Pulver sprühgetrocknet.

### Beispiel 2

Die Vorgangsweise von Beispiel 1 wurde wiederholt, mit dem Unterschied, daß anstelle von Natriumcaseinat ein aufgeschlossenes Weizenprotein als amphoteres Polymer eingesetzt wird.

### Beispiel 3

Die Vorgangsweise von Beispiel 1 wird wiederholt, mit dem Unterschied, daß anstelle einer Natriumcaseinatlösung eine amphotere Stärke als amphoteres Coatingmittel zum Einsatz gelangt.

### Beispiel 4

Zu der unter Beispiel 1 erwähnten Dispersion eines Styrol-Acrylsäureester-Copolymers wird eine 10 %ige wäßrige Lösung eines synthetischen amphoteren Polymeren, welches durch Umsetzung eines Maleinsäureanhydrid-Copolymers, z. B. Maleinsäurenhydrid-Styrol, mit einem Diamin, z. B. 3-Dimethylamino-1-propylamin, hergestellt wurde, zugegeben.

### Beispiel 5 (nicht erfindungsgemäß)

Das sprühgetrocknete Pulver des Beispiels 1 wurde für die Herstellung von flexiblen Zementkombinationen gemäß folgender Rezeptur verwendet:

| sprühgetrocknetes, gecoatetes | | |
|---|---|---|
| Polymerpulver | 30 | Teile |
| Zement PZ 45 F | 40 | Teile |
| Quarzsand (0,1→0,3 mm) | 60 | Teile |
| Harnstoff | 0,4 | Teile |
| Tannol NHC 9301 | | |
| (Naphthalinformaldehydsulfonat) | 0,2 | Teile |
| Na-Gluconat | 0,6 | Teile |
| Tylose P 6000 Z2 (Zelluloseäther) | 0,15 | Teile |
| Wasser | 65 | Teile |

### Beispiel 6

In ähnlicher Weise wie unter Beispiel 5 wurden die unter Beispiel 2 bis Beispiel 4 hergestellten Polymerpulver zur Herstellung von flexiblen Zementkombinationen herangezogen.

## Patentansprüche

1. Redispergierbare sprühgetrocknete Dispersionen eines Polymerisats auf Basis Vinylacetat, Styrol, Acrylsäureester und deren Copolymeren, **dadurch gekennzeichnet, daß** die die Polymerisatpartikel bildenden Mizellen des Emulsionspolymerisats einen Überzug aus einem amphoteren Polymer aufweisen, ausgenommen auf Caseinbasis, wobei der Gesamtladungszustand der Mizelle nicht verändert wird.

2. Dispersionen nach Anspruch 1, **dadurch gekennzeichnet, daß** die sprühgetrockneten Emulsionspolymerisate Glasübergangstemperaturen von -5°C bis -70°C aufweisen.

3. Dispersionen nach Anspruch 1 oder 2, **dadurch gekennzeichnet, daß** die Emulsionspolymerisate anionische Gruppen aufweisen.

4. Dispersionen nach Anspruch 3, **dadurch gekennzeichnet, daß** die anionischen Gruppen COOH-Gruppen sind.

5. Dispersionen nach einem der Ansprüche 1 bis 4, **dadurch gekennzeichnet, daß** das amphotere Polymer eine Glasübergangstemperatur aufweist, die mindestens über Zimmertemperatur liegt.

6. Dispersionen nach Anspruch 5, **dadurch gekennzeichnet, daß** die Glasübergangstemperatur im Bereich von 50°C bis über 130°C liegt.

7. Dispersionen nach einem der Ansprüche 1 bis 6, **dadurch gekennzeichnet, daß** das Coatingmittel aus Polysacchariden aufgebaut ist.

8. Dispersionen nach Anspruch 7, **dadurch gekennzeichnet, daß** das Coatingmittel aus amphoteren Stärken aufgebaut ist.

9. Dispersionen nach einem der Ansprüche 1 bis 6, **dadurch gekennzeichnet, daß** das Coatingmittel aus natürlichen Proteinen aufgebaut ist.

10. Dispersionen nach Anspruch 9, **dadurch gekennzeichnet, daß** das Coatingmittel aus Gelatine, Weizenprotein, Kartoffelprotein, Erbsenprotein oder Maisprotein aufgebaut ist.

11. Dispersionen nach einem der Ansprüche 1 bis 6, **dadurch gekennzeichnet, daß** das Coatingmittel auf Basis synthetischer Polymere aufgebaut ist.

12. Dispersionen nach Anspruch 11, **dadurch gekennzeichnet, daß** das Coatingmittel auf Copolymeren aus Acrylsäureestern und ungesättigten Carbonsäuren mit einem Gehalt an tertiären oder quartären Ammoniumgruppen in der Seitenkette aufgebaut ist.

13. Dispersionen nach einem der Ansprüche 1 bis 12, **dadurch gekennzeichnet, daß** das Coatingmittel aus amphoterem Polymer in einer Menge von 2 bis 10 Gew.-%, bezogen auf Festkörper des eingesetzten Emulsionspolymerisats, vorliegt.

14. Verfahren zur Herstellung von redispergierbaren sprühgetrockneten Dispersionen nach einem der Ansprüche 1 bis 13, **dadurch gekennzeichnet, daß** die aus der Emulsionspolymerisation erhaltene Dispersion von Polymerisaten mit Glasübergangstemperaturen von -5°C bis -70°C mit einer Lösung des amphoteren Polymers mit einer mindestens über Zimmertemperatur Liegenden Glasübergangstemperatur versetzt und in einem heißen Luftstrom zu einem freifließenden, staubarmen Pulver sprühgetrocknet wird.

15. Verwendung der redispergierbaren sprühgetrockneten Dispersionen nach einem der Ansprüche 1 bis 13 zur Herstellung von Trockenmischungen für Anstrich- und Beschichtungsmassen sowie, in Kombinationen mit hydraulisch abbindenden Massen, zur Herstellung hochflexibler, dehnbarer, rißüberbrückender Beschichtungen.

## Claims

1. Redispersible spray-dried dispersions of a polymer based on vinyl acetate, styrene, acrylate and copolymers thereof, **characterised in that** the micelles of the emulsion polymer forming the polymer particles have a coating of an amphoteric polymer, apart from casein-based, wherein the total charge state of the micelles is not changed.

2. Dispersions according to claim 1, **characterised in that** the spray-dried emulsion polymers have glass-transition temperatures of -5°C to -70°C.

3. Dispersions according to claim 1 or 2, **characterised in that** the emulsion polymers have anionic groups.

4. Dispersions according to claim 3, **characterised in that** the anionic groups are COOH groups.

5. Dispersions according to one of claims 1 to 4, **characterised in that** the amphoteric polymer has a glass-transition temperature which lies at least above room temperature.

6. Dispersions according to claim 5, **characterised in that** the glass-transition temperature lies in the range from 50°C to over 130°C.

7. Dispersions according to one of claims 1 to 6, **characterised in that** the coating agent is produced from polysaccharides.

8. Dispersions according to claim 7, **characterised in that** the coating agent is produced from amphoteric starches.

9. Dispersions according to one of claims 1 to 6, **characterised in that** the coating agent is produced from natural proteins.

10. Dispersions according to claim 9, **characterised in that** the coating agent is produced from gelatine, wheat protein, potato protein, pea protein or maize protein.

11. Dispersions according to one of claims 1 to 6, **characterised in that** the coating agent is produced on the basis of synthetic polymers.

12. Dispersions according to claim 11, **characterised in that** the coating agent is produced from copolymers of acrylates and unsaturated carboxylic acids containing tertiary or quaternary ammonium groups in the side chain.

13. Dispersions according to one of claims 1 to 12, **characterised in that** the coating agent made from amphoteric polymer is present in a quantity of 2 to 10 wt.%, relative to solids of the emulsion polymer used.

14. Process for producing redispersible spray-dried dispersions according to one of claims 1 to 13, **characterised in that** the dispersion of polymers having glass-transition temperatures of -5°C to -70°C obtained from emulsion polymerisation, is treated with a solution of amphoteric polymer having a glass-transition temperature lying at least above room temperature and spray-dried in a hot air stream to form a free-flowing, low-dust powder.

15. Use of the redispersible spray-dried dispersions according to one of claims 1 to 13 for the production of dry mixtures for paint and coating compositions and, in combination with hydraulically setting compositions, for the production of highly flexible, expandable, crack-bridging coatings.

## Revendications

1. Dispersions séchées par pulvérisation redispersibles d'un produit de polymérisation à base d'acétate de vinyle, de styrène, d'ester d'acide acrylique et de leurs copolymères, **caractérisées en ce que** les micelles du produit de polymérisation en émulsion formant les particules de produit de polymérisation comportent un revêtement à base de polymère amphotère, à l'exclusion de ceux à base de caséine, où l'état de charge global des micelles n'est pas modifié.

2. Dispersions selon la revendication 1 **caractérisées en ce que** les produits de polymérisation en émulsion séchés par pulvérisation présentent des températures de transition vitreuse de -5°C à -70°C.

3. Dispersions selon la revendication 1 ou 2 **caractérisées en ce que** les produits de polymérisation en émulsion présentent des groupes anioniques.

4. Dispersions selon la revendication 3 **caractérisées en ce que** les groupes anioniques sont des groupes COOH.

5. Dispersions selon l'une des revendications 1 à 4 **caractérisées en ce que** le polymère amphotère présente une température de transition vitreuse qui est située au moins au dessus de la température ambiante.

6. Dispersions selon la revendication 5 **caractérisées en ce que** la température de transition vitreuse est située dans le domaine de 50°C à plus de 130°C.

7. Dispersions selon l'une des revendications 1 à 6 **caractérisées en ce que** l'agent de revêtement est constitué à partir de polysaccharides.

8. Dispersions selon la revendication 7 **caractérisée en ce que** l'agent de revêtement est constitué à partir d'amidons amphotères.

9. Dispersions selon l'une des revendications 1 à 6 **caractérisées en ce que** l'agent de revêtement est constitué à partir de protéines naturelles.

10. Dispersions selon la revendication 9 **caractérisées en ce que** l'agent de revêtement est constitué à partir de gélatine, de protéine de blé, de protéine de pomme de terre, de protéine de pois ou de protéine de maïs.

11. Dispersions selon l'une des revendications 1 à 6 **caractérisées en ce que** l'agent de revêtement est constitué à base de polymères synthétiques.

12. Dispersions selon la revendication 11 **caractérisées en ce que** l'agent de revêtement est constitué à partir de copolymères d'esters d'acide acrylique et d'acides carboxyliques insaturés avec une teneur en groupes ammonium tertiaire ou quaternaire dans la chaîne latérale.

13. Dispersions selon l'une des revendications 1 à 12 **caractérisées en ce que** l'agent de revêtement à base de polymère amphotère est présent en une quantité de 2 à 10 % en masse, par rapport aux solides du produit de polymérisation en émulsion utilisé.

14. Procédé pour produire des dispersions séchées par pulvérisation redispersibles selon l'une des revendications 1 à 13 **caractérisé en ce que** la dispersion de produits de polymérisation ayant des températures de transition vitreuse de -5°C à -70°C obtenue à partir de la polymérisation en émulsion est additionnée d'une solution du polymère amphotère ayant une température de transition vitreuse située au moins au dessus de la température ambiante et est séchée par pulvérisation dans un courant d'air chaud en une poudre fluide pauvre en poussière.

15. Utilisation des dispersions séchées par pulvérisation redispersibles selon l'une des revendications 1 à 13 pour la production de mélanges secs pour masses d'enduction et de revêtement, dans des combinaisons avec des masses à prise hydraulique, pour la production de revêtements très flexibles, extensibles, recouvrant les fissures.
